# EUROPÄISCHE PATENTSCHRIFT

(11) **EP 1 025 878 B1**
(45) Veröffentlichungstag und Bekanntmachung des Hinweises auf die Patenterteilung: **03.07.2002**
(21) Anmeldenummer: 99810938.3
(22) Anmeldetag: 14.10.1999
(51) Int. Cl.: A62C 37/42, F16K 31/52

(54) **Verfahren und Vorrichtung für ein mechanisches Auslösesystem mit vorgespannten Klappen**
Process and device for a mechanical release system for prestressed valves
Procédé et dispositif pour un mécanisme d'ouverture de clapets précontraints

(30) Priorität: 05.02.1999 CH 22699
(43) Veröffentlichungstag der Anmeldung: 09.08.2000
(73) Patentinhaber: Incom Explosionsschutz AG, 4600 Olten (CH)
(72) Erfinder: Wegmüller, Rudolph, 4600 Olten (CH); Ruegg, Ernst, 8126 Zumikon (CH)
(74) Vertreter: Goth, Helmut, Dr.

(56) Entgegenhaltungen:
- EP-A- 0 467 089
- EP-A- 0 496 039
- DE-A- 1 550 428
- DE-A- 3 322 543
- DE-C- 284 194
- DE-C- 3 819 070
- FR-A- 1 435 945

## Beschreibung

Die vorliegende Erfindung bezieht sich auf ein Verfahren und eine Vorrichtung gemäss dem Oberbegriff des Patentanspruchs 1, resp. 14.

Unter mechanischen Auslösern seien Riegelmechanismen verstanden, die es gestatten, mit einer geringen Betätigungskraft (in der Regel im Bereich der Kraft der Hand) vorgespannte Tore, Ventile, Klappen und dergleichen kontrolliert zu entriegeln, so dass diese sich unter der Vorspannkraft freisetzen können.

Auslösesysteme mit Kugeln bzw. Rollen sind bekannt. Sie beruhen im allgemeinen darauf, dass Rollkörper in Bohrungen oder Bahnen geführt werden, dabei einen Körper auf einer Seite blockieren, auf der gegenüberliegenden Fläche von einer Nachbarrolle oder Steuerkurve gehalten werden und die Verschiebung dieser Steuerkurve die Rolle befreit und damit die Blockierung aufhebt. Bei diesen Anordnungen findet ein Rollen im Sinne einer Abrollbewegung nicht statt, der Wälzkörper ist einfach auf Grund seiner Geometrie ein zweckmässiger Riegel. Als Beispiel hierfür sei das Sicherheitsschloss erwähnt (DE-C-38 19 070).

Es sind Vorrichtungen bekannt, bei denen aus einer Reihe von Wälzkörpern, die parallel zu einer Führungsfläche vorgespannt sind, einzelne Wälzkörper durch eine Vorrichtung entnommen, bzw. ausgestossen werden. Dieser Vorgang geht stets mit nicht-abwälzenden Berührungen einher; dies gilt für die Entnahmevorrichtung und für die Fortsetzung einer Abwälzbewegung auf die benachbarten Rollen, bzw. Vorspannelemente. Solche Systeme können daher in der vorgespannten Kette keine Sicherheitsstrecken durchlaufen (DE-A-33 22 543). Eine geometrische Untersuchung zeigt, dass echtes, ungestörtes Abwälzen, z.B. bei Schlossmechanismen, nicht möglich ist. Der Vorhub beschränkt sich auf die Entnahmevorrichtung.

Die vorliegende Erfindung betrifft ein Auslösesystem für eine Klinkenkaskade zum sehr schnellen Öffnen einer unter Druck stehenden Klappe einer Löschvorrichtung.
Eine geführte, vorgespannte Fläche wirkt auf zumindest einen Rollkörper, der diese Kraft auf eine zweite, parallele verschiebbar gelagerte Fläche weiterleitet. Dieser Rollkörper rollt bei der Bewegung der zweiten Fläche auf beiden Flächen ab bis er in eine Randzone der einen Fläche gerät, in der die Parallelität in eine Nicht-Parallelität bzw. eine Divergenz übergeht. Dabei wird die Rolle ausgestossen und die Flächen bewegen sich zueinander. Die Bewegung der vorgespannten Fläche zur Gegenfläche bewirkt die Auslösung.

Bei sicherheitstechnisch schnellen Auslösesystemen ist die Systemreibung und der Ladestrombedarf ausschlaggebend. Bei der erfindungsgemässen Auslösung durch elektrodynamische oder elektromagnetische Kräfte ist es zeitlich entscheidend, dass Leistungen in Prozenten der ersten, betätigungsnahen Vorspannung genügen.

Nachteile bestehender, beispielsweise pyrotechnischer Öffnungsvorrichtungen sind neben dem Sicherheitsrisiko auch die Sicherheitsvorschriften für Betrieb und Transport. So sind etwa beim Export von Technikprodukten mit pyrotechnischen Einrichtungen, sowohl aufgrund von Einfuhrbestimmungen als auch durch den Transportweg zum Einsatzort selbst, Schranken auferlegt. Dies vor allem, wenn eine gesetzlich vorgegebene Detonationsenergie überschritten werden muss, um rasch genug zu sein.

Aufgabe der Erfindung ist es daher, ein Verfahren und eine Vorrichtung für ein Auslösesystem zu schaffen, das ohne Einsatz pyrotechnischer Mittel betriebssicher und lageunabhängig und mit verringerter Auslösezeit funktioniert. Verfahren und Vorrichtung sollen in bereits bestehenden Industrieanlagen und -geräten jeglicher Art integrierbar sein.

Diese Aufgabe wird durch die Merkmale der Patentansprüche 1 und 14 gelöst.

Das erfindungsgemässe Auslösesystem wird im folgenden anhand der Figuren beschrieben. Es zeigen:
- Fig. 1: Schematische Darstellung eines Auslösemechanismus mit Rotor, Rollkörper und Sperrklinke
- Fig. 2: Perspektivische Darstellung eines Rotors
- Fig. 3A-3D: Schematische Darstellung verschiedener Phasen des Auslösevorganges
- Fig. 4: Ausführungsbeispiel eines Auslösemechanismus integriert in eine Vorrichtung zur Unterdrückung von Staub- und/oder Gasexplosionen
- Fig. 5: Stösselstange mit Stösselkopf im Schnitt dargestellt

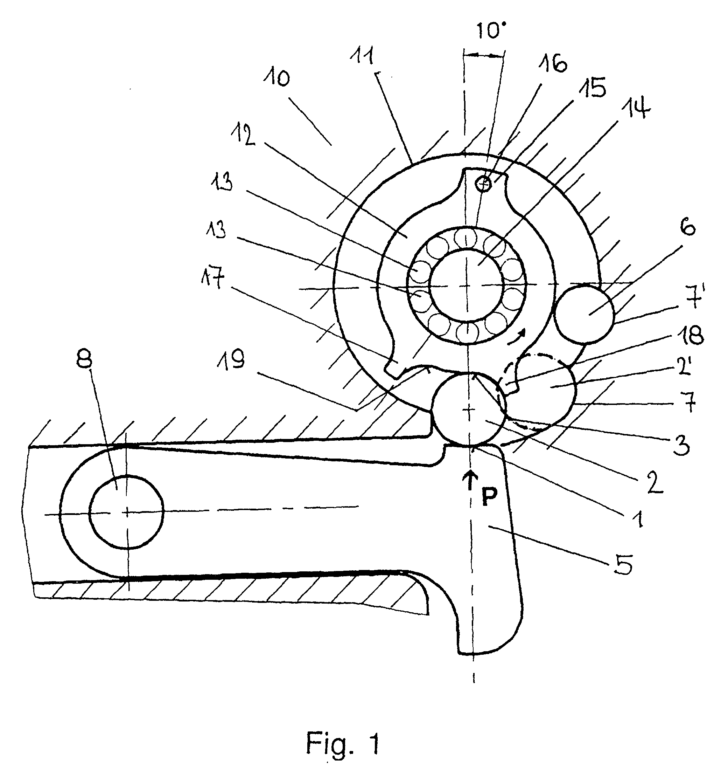

Fig. 1 zeigt in schematischer Darstellung einen Auslösemechanismus mit Rotor, Rollkörper und Sperrklinke.

In einem Schaltgehäuse 10, das zur Aufnahme des gesamten Auslösemechanismus vorgesehen ist, ist eine zylindrische Ausfräsung 11 angebracht, in der ein Rotor 12 gelagert angeordnet ist. Der Rotor bewegt sich auf einem Nadellager mit den Rollen 13, welche alle auf einer Lagerwelle 14 aufliegen. Dabei bildet der Rotor 12 den äusseren Ring des Nadellagers; der innere wird durch die Lagerwelle 14 gebildet.
Am äusseren Rand des Rotors 12 ist einerseits ein Nocken 15 angebracht, in dem ein Rückstellbolzen 16 eingelassen ist, und andererseits - dem Nocken etwa gegenüberliegend - eine Notnase 17 und eine Rückstellnase 18. Der am Rotor angebrachte Pfeil gibt die Drehrichtung der Auslösebewegung an. Notnase 17 und Rückstellnase 18 sind mit einer Abrollkurve 19 miteinander verbunden, auf deren spezielle Eigenschaften später eingegangen wird.

Ein Rollkörper 2 liegt einerseits auf einer parallel verschiebbaren Fläche 3 der Abrollkurve 19 auf, andererseits auf einem Rollenanschlag 4, der Teil des Schaltgehäuses 10 ist.

Auf der der Fläche 3 gegenüberliegenden Seite des Rollkörpers 2 steht dieser mit einer Fläche 1 einer Sperrklinke 5 in Kontakt. Diese ist in einem Lager 8 beweglich gelagert und vorgespannt. Sie wirkt mit einer Kraft P auf den Rollkörper 2, der die Kraft auf die Abrollkurve 19 des Rotors 12 überträgt.

Sperrklinke 5, Rollkörper 2 und Fläche 3 der Abrollkurve entsprechen in der dargestellten Lage dem gespannten Zustand des Auslösemechanismus. Durch das Nadellager werden die Vorteile der Wälzlagerung voll genutzt und die Reibung möglichst klein gehalten.

Ebenfalls in Fig. 1 ersichtlich ist ein Rollkörper 2' - gestrichelt dargestellt - im entspannten Zustand des Auslösemechanismus. Der Rollkörper 2' befindet sich in einer Ausnehmung 7 des Schaltgehäuses 10 in einer sogenannten Fangstellung und liegt darin an. In einer weiteren zylindischen Bohrung 7' des Schaltgehäuses 10 befindet sich ein Dämpfungsstift 6, der als Anschlag für die Rückstellnase 18 und zur Dämpfung der Rotorbewegung dient.

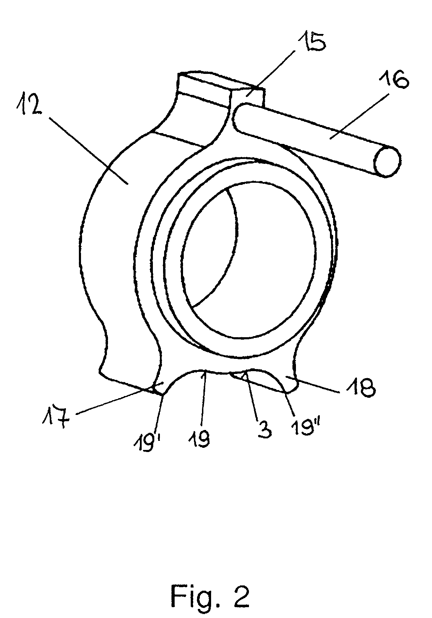

Fig. 2 zeigt eine perspektivische Darstellung des Rotors. Der Rotor 12 mit Nocken 15, Rückstellbolzen 16, Notnase 17, Rückstellnase 18 und der Abrollkurve 19 entsprechen der Fig. 1. Die Abrollkurve 19 wird einerseits durch eine Kante 19' der Notnase 17 und andererseits durch eine Kante 19" der Rückstellnase 18 begrenzt und schliesst die Fläche 3 als Teil davon ein.
Für die Drehbewegung des Rotors ist ein elektrodynamischer Auslösemechanismus vorgesehen, der aus einem Torque-Motor besteht und hier nicht näher beschrieben wird.
Der Nocken 15 des Rotors dient für die Kraftübertragung des elektrodynamischen Auslösemechanismus, indem er in eine Aussparung eines zum Torque-Motor gehörenden Spulenkörpers greift.
Im weiteren dient der Nocken 15 mit dem Rückstellbolzen 16 als Massenausgleich für Rückstellnase und Notnase, damit unter Vibration keine Drehmomente entstehen können.

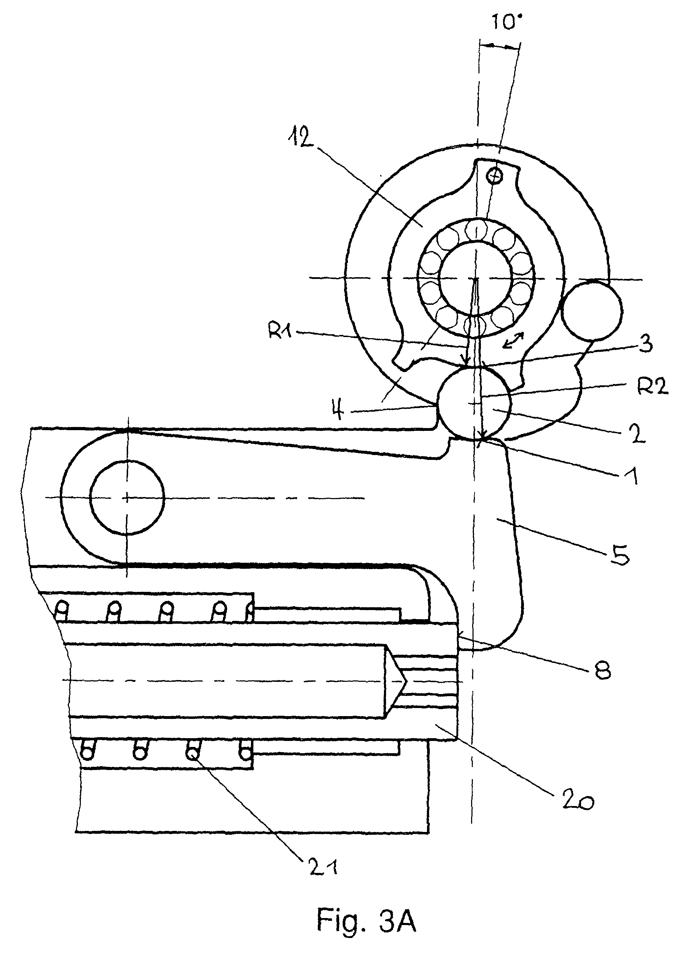

Fig. 3A-3D zeigen in schematischer Darstellung verschiedene Phasen des Auslösevorganges anhand deren die Funktion des Auslösemechanismus erläutert wird.

Fig. 3A zeigt die Ausgangslage des vorgespannten Auslösemechanismus.
Der Rollkörper 2 berührt den Rollenanschlag 4, liegt auf der Fläche 3 des Rotors 12 auf und wird durch die Sperrklinke 5 mit deren Fläche 1 vorgespannt. Der Rollkörper 2 kann sich vom Rollenanschlag 4 in einem kleinen Bereich wegbewegen, wobei der Rollkörper immer zwischen zwei konzentrischen, bzw. parallelen Flächen 1 und 3 abrollt.
In der vorliegenden Beschreibung werden die Flächen 1 und 3, die ein zwangloses Abrollen des Rollkörpers ermöglichen, als parallel bezeichnet. Im Ausführungsbeispiel werden dann die parallelen Flächen durch konzentrische Flächen ersetzt. Ein derartiges Abrollen kann durch Umgebungseffekte wie Schwingungen, Vibrationen, Beschleunigung und Stoss verursacht werden und wird mit einem 'mechanischen Rauschen' bezeichnet in Analogie zum Signalrauschen in der Elektrotechnik. Im Bereich dieser kleinen Bewegungen werden unkontrollierte Auslösungsvorgänge wirkungsvoll unterdrückt. Es kommt nicht zu unerwünschten erratischen Auslösungen. In diesem Bereich nimmt der Rollkörper 2 eine neutrale Lage ein.
Die Abrollkurve 19 weist in diesem Bereich einen Radius R1 auf, während die Fläche 1 der Sperrklinke 5 einen Radius R2 aufweist. Die Bewegungen des sich mitbewegenden Rotors 12 sind mit einem kurzen beidseitigen Pfeil angedeutet.
Die Sperrklinke 5 weist auf der der Fläche 1 gegenüberliegenden Seite eine zweite Fläche 8 auf, die eine ebenfalls im Schaltgehäuse 10 gelagerte Stösselstange 20 mit Rückstellfeder 21 verriegelt.

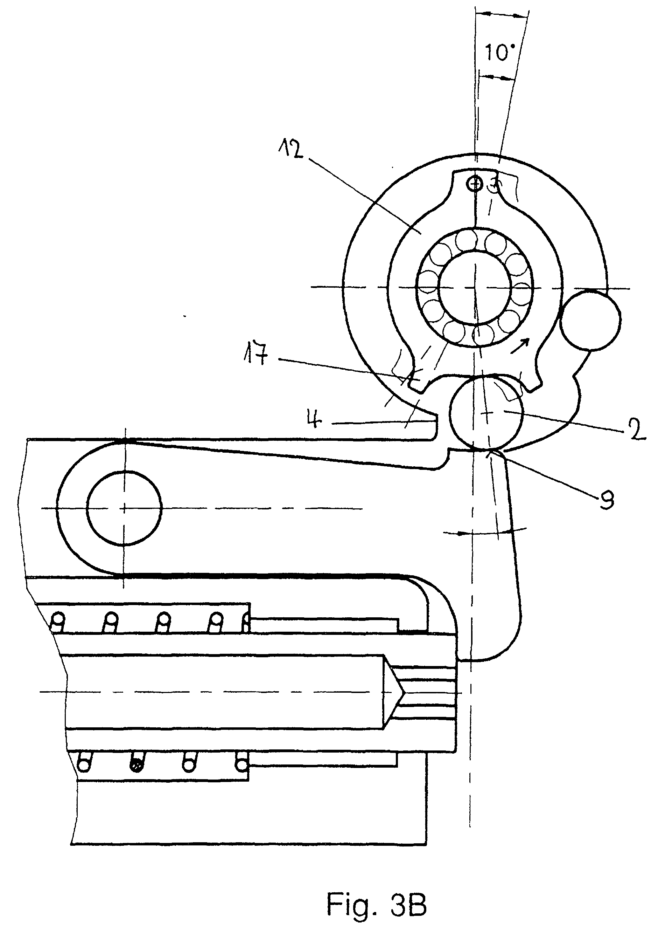

Fig. 3B zeigt die letzte neutrale Lage des vorgespannten Auslösemechanismus vor dem Springen des Rollkörpers.
Der Rollkörper 2 hat sich deutlich vom Rollenanschlag 4 wegbewegt, was jetzt durch den initialisierten Auslösevorgang bewirkt wird. Die Auslösebewegung des sich mitbewegenden Rotor 12 ist mit einem einseitigen Pfeil angedeutet. Die Lage des Rollkörpers 2 ist dadurch charakterisiert, dass er zwar immer noch auf der Fläche 1 der Sperrklinke 5 mit Radius R2 aufliegt aber sich gleichzeitig am Beginn einer Randzone 9 befindet, in welcher der Rollkörper sich dann in einer labilen Lage befindet.

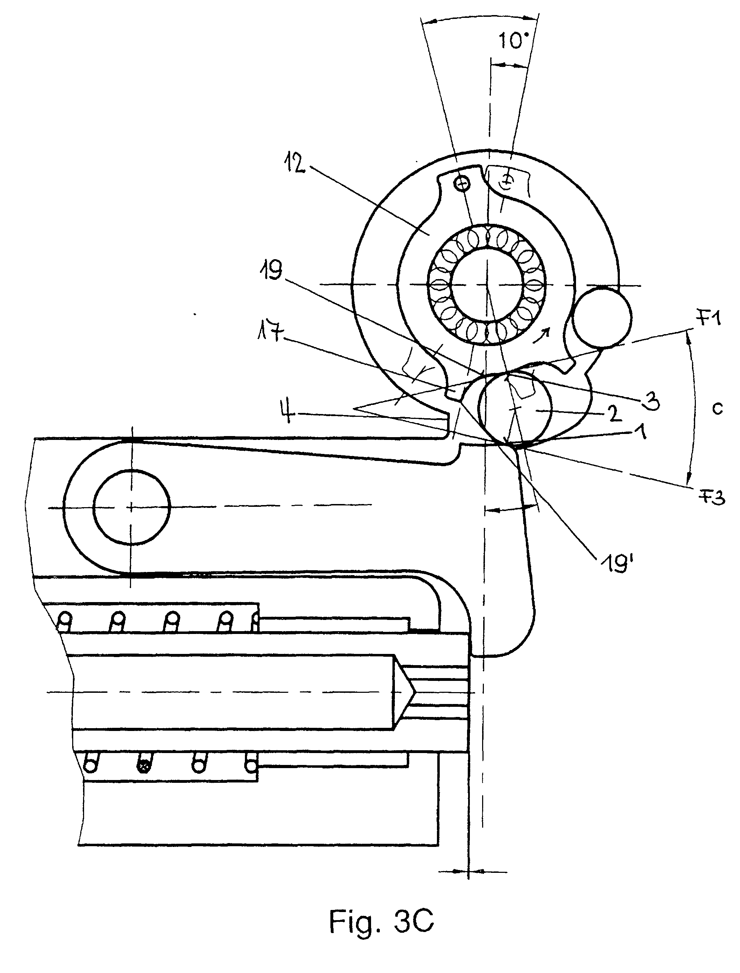

Fig. 3C zeigt eine eindeutig divergierende Lage des vorgespannten Auslösemechanismus kurz vor dem Springen des Rollkörpers.
Der Rollkörper 2 hat sich weiter vom Rollenanschlag 4 wegbewegt, was durch den mitbewegten Rotor 12 in Pfeilrichtung bewirkt wird. Die Flächen 1 und 3 in den Berührungspunkten des Rollkörpers 2 sind nun nicht mehr parallel sondern divergierend, was durch die eingetragenen Flächen F1 und F3 verdeutlicht wird. Die Flächen F1 und F3 bilden den sogenannten Divergenzwinkel c. Sobald dieser von null verschieden wird, gerät der Rollkörper in eine instabile Lage, in der er jeden Augenblick springen kann. Dieser 'transiente' Augenblick - wie er auch bezeichnet wird - ist dann gegeben, wenn der Tangens des Divergenzwinkels grösser als etwa 2·10E-4 wird. Wenn dieser Abrollvorgang keinen wesentlichen Schlupf aufweist, dann springt der Rollkörper 2 bevor die Notnase 17 diesen berührt.
Wenn der Abrollvorgang jedoch einen Schlupf aufweist, was beispielsweise dann der Fall sein kann, wenn eine Ameise oder Teile davon oder irgendwelche Verunreinigungen auf den Flächen 1 und/oder 3 sich befinden, so wird das rechtzeitige Springen des Rollkörpers 2 verhindert, bzw. verzögert.
Die Notnase 17 des Rotors 12, welcher aktiviert ist, wird dann mit der Abrollkurve 19 an den Rollkörper geschlagen und die Kante 19' der Notnase schiebt den Rollkörper weg. Damit gelangt der Rollkörper zwangsweise soweit in den labilen, bzw. divergenten Bereich bis er springen muss.

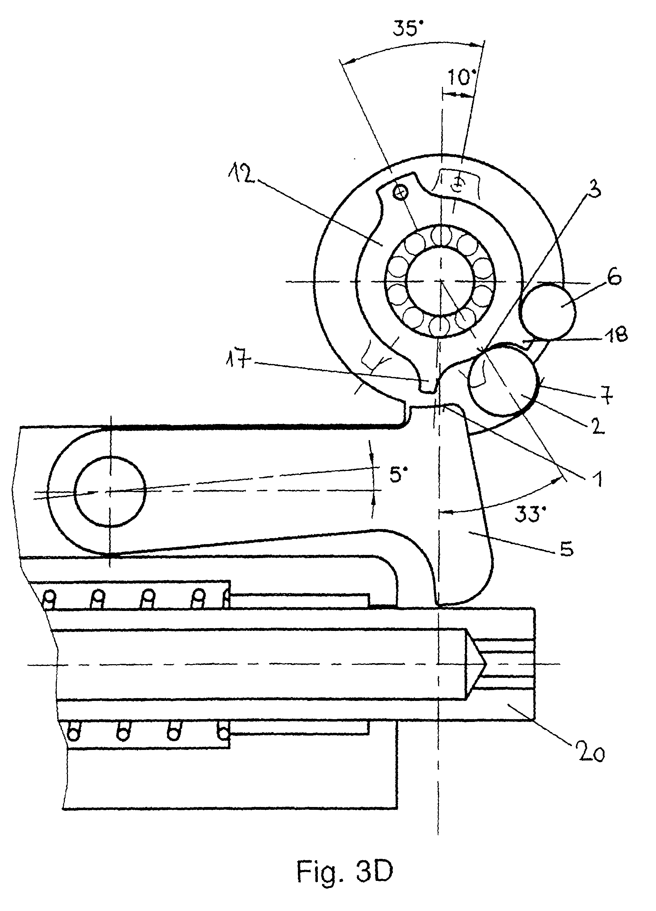

Fig. 3D zeigt die Endlage des Rollkörpers im ausgelösten Zustand.
Der Rollkörper 2 befindet sich in der Fangstellung und liegt in der Ausnehmung 7 auf. Die Sperrklinke befindet sich mit der Fläche 1 hinter dem Rollkörper 2 und vor der Notnase 17. Der Rollkörper 2 bleibt mit der Fläche 3 des Rotors in Berührung. Der Rotor hat sich inzwischen um mindestens 35° aus der Anfangslage in die Endlage gedreht und liegt mit der Rückstellnase 18 am Dämpfungsstift 6 an, der vorzugsweise aus einem Kunststoff besteht, um die bewegte Masse zu dämpfen. Die Sperrklinke 5 hat bei der Auslösung eine Lageveränderung von etwa 5° erfahren und dabei die Stösselstange 20 freigegeben.

Mit der Funktion der Notnase 17 wird dem Auslösemechanismus eine weitere Sicherheit verliehen, was ihn in Bezug aus Kontaminationen irgendwelcher Art weitestgehend unabhängig macht.
Es ist bemerkenswert, dass das Springen des Rollkörpers deutlich vor der Winkelstellung erfolgt, bei der die Notnase den Rollkörper berührt. Erst wenn ungewöhnliche Hindernisse, z.B. ein Plattwalzen vom Ameisen, den Anlauf des Wälzens beeinflussen und dadurch des Abrollvorganges verzögern, tritt die Notnase in Aktion und stösst den Rollkörper in den divergenten Abschnitt.

Nach erfolgtem Springen des Rollkörpers, resp. Auslösung des gesamten Mechanismus (Fig. 3D), sorgt ein Rückstellmechanismus dafür, dass der Rollkörper wieder in den gespannten Zustand gebracht werden kann, bzw. für die Neueinrichtung. Hierfür ist eine Torsionsfeder vorgesehen (nicht dargestellt). Im gespannten Zustand sorgt die Torsionsfeder durch eine Vorspannung für eine feste und sichere Lage des Rotors, sodass von einer 'gesicherten Ausgangslage' gesprochen werden kann.
Im entspannten Zustand weist die Torsionsfeder eine zusätzliche, und damit erhöhte Vorspannung auf, die während des Auslösevorgangs gespeichert wird, und die für die Rückstellung des Rotors in dessen Ausgangslage vorgesehen ist.

Es ist im erfindungsgemässen Verfahren bemerkenswert, dass der Auslösevorgang, bzw. der Schaltvorgang in der Phase der Flächenparallelität indifferent ist, und auch durch oszillierendes Rollen nicht ausgelöst oder feststellbar initialisiert wird, solange die divergente Fläche nicht erreicht wird.

Für den Vorgang des Rollen muss zumindest eine der konzentrischen, bzw. parallelen Flächen längs bewegt werden. Bei bekannten Schaltvorgängen werden häufig Sicherheitsmechanismen in Form von Schlössern vorgeschaltet. Durch subtiles Messen der Drehmomente und Geräusche können Schlüsselform und Zahlencode ermittelt werden, wenn durch die Betätigung fühlbar Schaltvorgänge anlaufen. Dies ist bei der erfindungsgemässen Technologie nicht möglich, da in der Phase der Flächenparallelität keine Schaltvorgänge anlaufen. Dadurch unterscheidet sich die erfindungsgemässe Lösung wesentlich von bisherigen.
Die Positionsdifferenzen der Schaltelemente bekannter Sicherheitsschlösser sind im verriegelten Zustand so klein, dass die entsprechenden Differenz-Bewegungen für das nachgeschaltete Auslösesystem stets in der Phase des 'mechanischen Rauschens', bzw. in der neutralen Lage, bleiben.

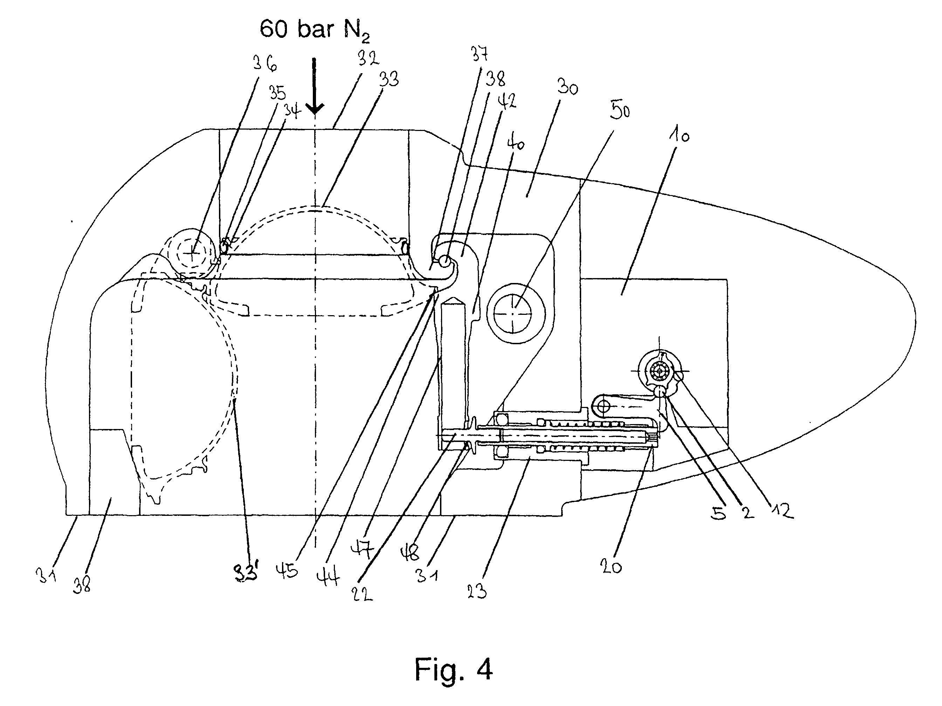

Fig. 4 zeigt als Ausführungsbeispiel einen Auslösemechanismus integriert in eine Ventil-Vorrichtung zur schnellen Öffnung von HDR-Löschmittelbehältern.
Das Schaltgehäuse 10 ist mit einem Ventilgehäuse 30 verschraubt, das seinerseits über die Auflageflächen 31 mit dem Aufbau eines Prozessbehälters (nicht dargestellt) dicht verbunden ist.

Eine Druckgasflasche (nicht dargestellt), welche bekannte Löschmittel wie Pulver, Gas, Wasser etc. enthält, weist einen rotationssymmetrischen Hals 32 auf, dessen Mündung durch eine eingefahrene Verschlussklappe 33 mit in einer Nut 34 geführten Dichtung 35 über die Klappenlagerung 36 verschlossen wird.

Der Klappenlagerung 36 gegenüberliegend befindet sich am Ventilgehäuse 30 ein nasenförmiger Vorsprung 37 mit einer Einsenkung, in der ein Scharnierstift 38 liegt und auf dem eine Hauptfalle 40 schwenkbar aufliegt.

Der obere Teil 42 der Hauptfalle 40 weist einen schmalen Sims 44 auf, auf dem ein Vorsprung 45 der Verschlussklappe 33 im verriegelten Zustand aufliegt. Im geöffneten Zustand liegt die Verschlussklappe 33' auf einem Dämpfungselement 38 auf, welches den heftigen Schlag bei der Auslösung aufnimmt. Die Hauptfalle 40 ihrerseits geht in ihrer Fortsetzung in einen runden Querschnitt über und - als zweiter Auslösehebel 47 ausgebildet - liegt mit dem Ende, das eine nutförmige Ausnehmung 48 aufweist, auf einem Stösselkopf 22 der Stösselstange 20 auf. Die Stösselstange 20 ist mittels einer Stösselführung 23 mit dem Ventilgehäuse 30 fest verbunden. Die Funktion von Stösselstange und Stösselführung wird später eingehend beschrieben.
Im weiteren sind im Schaltgehäuse 10 der Rotor 12, der Rollenkörper 2 und die Sperrklinke 5 in verriegeltem Zustand erkennbar.

Neben der Hauptfalle 40 und oberhalb der Stösselstange 20 ist ein Verriegelungsbolzen 50 angebracht, der als Exzenter ausgebildet ist und mit der Hauptfalle mechanisch verriegelt werden kann. Damit kann die Funktion des Auslösemechanismus jederzeit überprüft werden, ohne dass die Verschlussklappe 33 geöffnet wird.

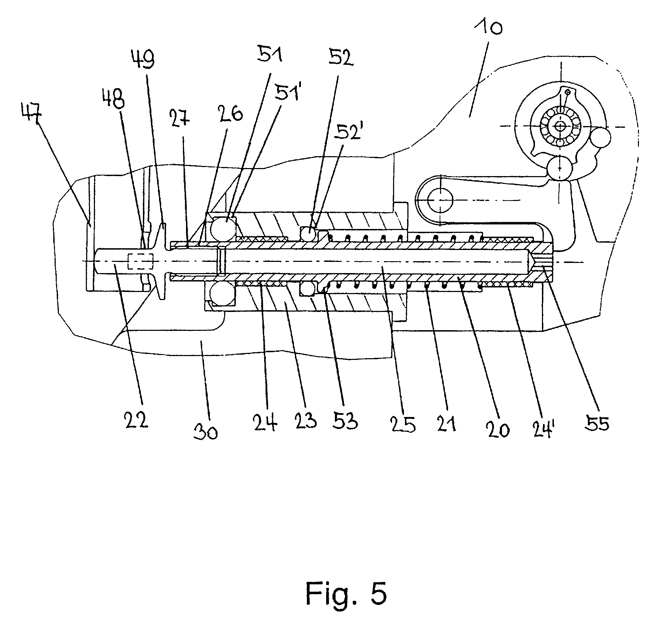

Fig. 5 zeigt die Stösselstange mit Stösselkopf im Schnitt dargestellt.
Die zylindrische Stösselstange 20 wird durch Gleitbüchsen 24' und 24" gelagert, die in der Stösselführung 23 und im Schaltgehäuse 10 eingelassen sind. Sie weist eine beinahe durchgehende Bohrung 25 auf, die im vorderen Bohrungsteil mit einem Innengewinde 26 versehen ist. Der zylindrische Stösselkopf 22 hat auf der einen Seite ein Aussengewinde 27 und kann mit der Stösselstange verschraubt werden. Auf der anderen Seite weist der Stösselkopf zwei planparallele Flächen auf, über die er in einer Nut 48, die am untersten Ende 47 der Hauptfalle angebracht ist, verdrehgesichert montiert werden kann.
In der Mitte des Stösselkopfes befindet sich eine tellerförmige Scheibe 49, die für die Abdichtung der 'Löschmittelseite' beim Auslösevorgang vorgesehen ist. Dieser Abdichtung dienen zwei O-Ringe 51 und 52, die beide in der Stösselführung in Nuten 51' und 52' eingelassen sind und den Schaltmechanismus, der im Schaltgehäuse 10 untergebracht ist, von der 'Löschmittelseite' des Ventilgehäuses 30 trennen. Dies ist besonders vorteilhaft wegen der Verschmutzungsgefahr und schützt den Auslösemechanismus von den unter hohem Druck ausströmenden Löschmitteln.

Beim Auslösevorgang wird die Bewegung der Stösselstange 20 durch die Sperrklinke 5 freigegeben, worauf die tellerförmige Scheibe 49 des Stösselkopfes mit grosser Dynamik auf den O-Ring 51 trifft, diesen elastisch verformt und dadurch einen zusätzlichen Dichtungseffekt erwirkt. An der Stösselstange 20 befindet sich etwa in deren Mitte ein Ring 53, auf dem die Rückstellfeder 21 aufliegt und mit der die Stösselstange nach der Auslösung wieder in die Ausgangsstellung gebracht wird, wobei der O-Ring 52 das Zurückschnellen der Stösselstange abfedert. Damit ergibt sich für die beiden O-Ringe je eine Doppelfunktion, nämlich jene der Dichtung einerseits und jene der Dämpfung andererseits.

Auf der dem Stösselkopf abgewandten Seite der Stösselstange weist diese eine 6-Kant-Bohrung 55 auf, die für die Justierung vorgesehen ist. Das sichere Funktionieren des Auslösesystems setzt das Beherrschen sämtlicher Spalttoleranzen in der Kaskade der Kraftübertragungen voraus. Über 6-Kant-Bohrung 55 kann die Stösselstange 20 durch Drehung gegenüber dem verdrehgesicherten Stösselkopf 22 im Gewinde 26 verdreht und damit ein wohldefinierte Spalttoleranz zwischen dem Ende der Stösselstange und der Sperrklinke eingestellt werden. Damit ergeben sich die Mittel zur Justierung, die im wesentlichen die Stösselstange 20, den Stösselkopf, sowie deren Gewinde 26 und 27 umfassen.
Vorteilhaft erscheint zudem die Justierung von aussen, nachdem das Gesamtsystem fertig montiert vorliegt.

Von primärem Interesse ist es, das elektromechanische Auslösesystem im betriebsmässigen Zustand bei verriegelter Klappe 33 sicher auf seine Funktionalität prüfen zu können.
Dazu sind verschiedene Mittel der Überwachung vorgesehen: Ein Verriegelungsbolzen 50 (Fig. 4), der ausserhalb des Ventilgehäuses zugänglich ist und einfach um 180° gedreht werden kann, wobei der Exzenter an die Hauptfalle zu liegen kommt und diese verriegelt. Die Erkennung der Exzenterposition erfolgt durch zwei Magnetschalter, von denen der eine aktiv und der andere passiv angeordnet ist.
Die Signale der Magnetschalter werden in Serie geschaltet, wodurch sich eine redundante Anordnung erzielen lässt, und mit der Prüffreigabe verknüpft.
Die Lage des Rotors wird einerseits durch eine optische Lichtschranke erfasst, indem diese um den Rückstellbolzen angeordnet ist. Andererseits wird die Torsionsfeder, die am Rückstellbolzen anliegt und den Rotor in die Ausgangslage bringt, auf Bruch überwacht, indem sie in einen elektrischen Kreis geschaltet wird. Dadurch ergibt sich eine divergierende Redundanz.
Die Signale der Magnetschalter, jene der optischen Lichtschranke und jenes für die torsionsfeder werden einer Koinzidenzschaltung zugeführt, die den Stromimpuls zum Torque-Motor, d.h. zur Prüfauslösung des Systems nur dann freigibt, wenn der Verriegelungsbolzen und der Rotor in den richtigen Positionen geortet wurden.

Die Validierung des Löschbehälter-Ventils im betriebsmässigen Zustand (Löschmittel mit Treibmitteldruck) ist eine vorteilhafte sicherheitstechnische Kontrolle.

Auslösesysteme mit zwei oder mehreren Rollkörpern sind ebenfalls denkbar. So erlauben derartige Systeme wegen der Lastverteilung auf mehrere Rollkörper eine kleinere Bauweise.

Anwendungen findet das erfindungsgemässe Verfahren beim Einsatz von Schutzeinrichtungen für die Unterdrückung von Staub- und/oder Gasexplosionen, sowie Bränden, in industriellen Anlagen, zur Auslösung einer Klinkenkaskade, die mit dem sehr schnellen Öffnen einer unter Druck stehenden Klappe der Löschvorrichtung endet.

## Patentansprüche

1. Verfahren für ein mechanisches Auslösesystem mit vorgespannten Klappen, **dadurch gekennzeichnet, dass** eine geführte, vorgespannte erste Fläche (1) auf zumindest einen Rollkörper (2) mit einer Kraft (P) wirkt, wobei diese Kraft (P) über den Rollkörper (2) auf eine,
bezüglich der ersten Fläche (1) konzentrische und drehbar gelagerte zweite Fläche (3) oder bezüglich der ersten Fläche (1) parallele und verschiebbar gelagerte zweite Fläche (3) weiterleitet,
dass der Rollkörper (2) bei der Bewegung der zweiten Fläche (3) auf beiden Flächen (1, 3) abrollt bis er in eine Randzone (9) der ersten Fläche (1) gerät, in der die Parallelität der Flächen (1, 3) in eine Nicht-Parallelität, bzw. Divergenz übergeht, dass der Rollkörper (2) ausgestossen wird und die Flächen (1, 3) sich zueinander bewegen, und dass durch die Bewegung der vorgespannten Fläche (1) zur Gegenfläche, bzw. zweiten Fläche (3) die Auslösung bewirkt wird.

2. Verfahren nach Anspruch 1, **dadurch gekennzeichnet, dass** die Bewegung der zweiten Fläche (3) durch eine Rollenlagerung (12, 13, 14) reibungsarm gehalten wird.

3. Verfahren nach Anspruch 1 oder 2, **dadurch gekennzeichnet, dass** der Rollkörper (2), nachdem er ausgestossen wurde, bzw. nach einem Springen von einer Fangstellung aufgefangen wird, aus der er mittels einer Rückstellnase (18) als erste Begrenzung der zweiten Fläche (3) in die Ausgangslage gebracht wird.

4. Verfahren nach einem der Ansprüche 1 - 3, **dadurch gekennzeichnet, dass** ein Rotor (12) durch eine Vorspannung einer Torsionsfeder in einer Ausgangsstellung gehalten und nach der Auslösung wieder rückgestellt wird.

5. Verfahren nach einem der Ansprüche 1 - 4, **dadurch gekennzeichnet, dass** der Rollkörper (2) auf einer Rollstrecke, die im Bereich der neutralen Lage des Rollkörpers (2) liegt, wo die beiden Flächen (1, 3) parallel vorliegen, ein 'mechanisches Rauschen' und andere Umgebungseffekte wie Schwingungen, Beschleunigung und Stoss in Bezug auf die Auslösung unterdrückt.

6. Verfahren nach einem der Ansprüche 1 - 5, **dadurch gekennzeichnet, dass** die zum Springen des Rollkörpers (2) erforderliche Drehbewegung der zweiten Fläche (3) durch einen Torque-Motor erzeugt wird.

7. Verfahren nach einem der Ansprüche 1 - 6, **dadurch gekennzeichnet, dass** das Springen des Rollkörpers (2) deutlich vor der Winkelstellung erfolgt, bei der eine Notnase (17) den Rollkörper (2) berührt.

8. Verfahren nach einem der Ansprüche 4 - 7, **dadurch gekennzeichnet, dass** der Rollkörper (2) durch eine Notnase (17) auf dem Rotor (12) mittels einer zweiten Begrenzung der zweiten Fläche (3) in die Randzone (9) der ersten Fläche (1) befördert wird, falls der Abrollvorgang verzögert wurde, und dass dadurch die Auslösung bewirkt wird.

9. Verfahren nach Anspruch 7 oder 8, **dadurch gekennzeichnet, dass** das Springen des Rollkörpers (2) eine Sperrklinke (5) freigibt, indem sich diese in Richtung der zweiten Fläche (3) bewegt, und dass die Sperrklinke (5) als Teil einer Klinkenkaskade mit Kraftuntersetzungsmechanik die Kaskade gesamthaft auslöst.

10. Verfahren nach einem der Ansprüche 1 - 9, **dadurch gekennzeichnet, dass** die Einstellung der Spalttoleranzen zwischen dem Ende einer Stösselstange (20) und der Sperrklinke (5) durch Drehen einer Stösselstange (20) gegen einen verdrehsicher gelagerten Stösselkopf (22) erzielt wird.

11. Verfahren nach einem der Ansprüche 1 - 10, **dadurch gekennzeichnet, dass** die Überwachung der Lage des Rotors (12) mittels einer optischen Lichtschranke und der elektrisch leitenden Torsionsfeder und die die Überwachung der Lage des Verriegelungsbolzens (50) mittels Magnetschalter erfolgt, dass redundante Überwachungssignale erzeugt und diese in einer Koinzidenzschaltung verarbeitet werden.

12. Verfahren nach Anspruch 11, **dadurch gekennzeichnet, dass** sich die sichere Funktion des Auslösesystems im betriebsmässigen Zustand bei verriegelter Klappe (33), bzw. bei verriegelter Hauptfalle überprüfen lässt.

13. Anwendung des Verfahrens nach einem der Ansprüche 1- 12 bei der Öffnung von Feuerlöschern zur Unterdrückung von Staub- und/oder Gasexplosionen sowie Bränden in industriellen Anlagen.

14. Vorrichtung zur Ausübung des Verfahrens nach einem der Ansprüche 1 - 12 an einer Klappe, **dadurch gekennzeichnet, dass** in einem Schaltgehäuse (10) zumindest ein Rollkörper (2) zwischen zwei Flächen (1, 3) angeordnet ist, wobei eine erste Fläche (1) einer Sperrklinke (5) für das Anliegen einer Vorspannung und eine zweite konzentrische verdrehbare Fläche (3) eines
Rotors (12) für das Abrollen vorgesehen ist, dass die zweite Fläche (3) als Teil einer Abrollkurve (19) und als Abschnitt des Rotors (12) ausgebildet ist, wobei letzterer im Schaltgehäuse (10) gelagert angeordnet und auf einem Nadellager abgestützt ist und dass die erste Fläche (1) eine Randzone (9) aufweist, in der die Parallelität der Flächen (1, 3) in eine Nicht-Parallelität, bzw. Divergenz übergeht.

15. Auslösesystem nach Anspruch 14, **dadurch gekennzeichnet, dass** Mittel zur Justierung der Spalttoleranzen zwischen dem Ende einer Stösselstange (20) und der Sperrklinke (5) vorgesehen sind.

16. Auslösesystem nach Anspruch 14 oder 15, **dadurch gekennzeichnet, dass** Mittel zur Überwachung der Lagezustände für den Rotor (12) und den Verriegelungsbolzen (50) vorgesehen sind.

17. Auslösesystem nach einem der Ansprüche 14 - 16, **dadurch gekennzeichnet, dass** die erste Fläche (1) in einer Randzone (9) in eine zylindrische Fläche übergeht, in der sich der Auslösepunkt befindet, bei dem die Flächen (1, 3) nicht mehr konzentrisch zueinander sind und bei dem der abrollende Rollkörper (2) zum Springen in Rollrichtung vorgesehen ist, und dass die erste Fläche (1) als Teil einer Sperrklinke (5) ausgebildet ist.

18. Auslösesystem nach einem der Ansprüche 14 - 17, **dadurch gekennzeichnet, dass** der Rotor (12), eine Notnase (17), eine Rückstellnase (18), eine Abrollkurve (19), einen Nocken (15) und einen Rückstellbolzen (16) aufweist und dass sich der Rotor (12) in einer zylindrischen Ausfräsung (11) des Schaltgehäuses (10) befindet.

19. Auslösesystem nach einem der Ansprüche 14 - 18, **dadurch gekennzeichnet, dass** der Rotor (12) mit dem Nocken (15) in einen Schlitz eines Spulenkörpers greift, der Teil eines Torque-Motors ist, wobei letzterer als Antrieb für den elektrodynamischen Auslösemechanismus vorgesehen ist.

20. Auslösesystem nach einem der Ansprüche 14 - 19, **dadurch gekennzeichnet, dass** für den Rollkörper (2) eine Ausnehmung (7) im Schaltgehäuse (10) als Fangstellung vorgesehen ist, in welcher der Rollkörper (2) nach dem Springen anliegt.

21. Auslösesystem nach einem der Ansprüche 15 - 20, **dadurch gekennzeichnet, dass** als Mittel zur Justierung eine drehbare Stösselstange (20) mit einem verdrehgesicherten Stösselkopf (22) zwischen der Sperrklinke (5) und einer Hauptfalle (40) angeordnet ist, wodurch sich das Spiel zwischen dem Ende der Stösselstange (20) und der Sperrklinke (5) Einstellen lässt.

22. Auslösesystem nach Anspruch 21, **dadurch gekennzeichnet, dass** die Stösselstange (20) ein Innengewinde (26) aufweist, welches das Aussengewinde (27) des Stösselkopfes (22) aufnimmt.

23. Auslösesystem nach einem der Ansprüche 16 - 22, **dadurch gekennzeichnet, dass** als Mittel zur Überwachung für die Erkennung der Lage des Rotors (12) eine um den Rückstellbolzen (16) angeordnete optische Lichtschranke eine elektrische Leitungskontrolle der Torsionsfeder und für die Erkennung der Lage des Verriegelungsbolzens (50) Magnetschalter sowie eine Koinzidenzschaltung zur Verarbeitung der Überwachungssignale vorgesehen sind.

## Claims

1. Process for a mechanical triggering system with spring-loaded flaps,
wherein a guided, spring-loaded first surface (1) acts on at least one rolling element (2) with a force (P), this force (P) being transmitted via the rolling element (2) to a second surface (3) which relative to the first surface (1) is concentric and rotatably mounted or to a second surface (3) which relative to the first surface(1) is parallel and movably mounted,
wherein in the movement of the second surface (3) the rolling element (2) follows both cam surfaces (1, 3) until it comes into an edge zone (9) of the first surface (1) in which the parallelism ofthe surfaces (1, 3) verges into a non-parallelism or divergence,
wherein the rolling element (2) is ejected and the surfaces (1, 3) move relative to one another, and
wherein as a result of the movement of the spring-loaded surface (1) relative to the opposed or second surface (3) the triggering is effected.

2. Process as claimed in claim 1, wherein the movement of the second surface (3) is kept low in friction by anti-friction mounting (12, 13, 14).

3. Process as claimed in any one of claims I or 2, wherein after the rolling element (2) was ejected or after jumping is caught up in a catch position from which it is brought back into the starting position by means of a reset lug (18) as the first limitation of the second surface (3).

4. Process as claimed in any one of claims 1 - 3, wherein a rotor (12) is held in the starting position by the spring loading of a torsion spring and is reset after the triggering.

5. Process as claimed in any one of claims 1 - 4, wherein on a rolling track in the area of the neutral position of the rolling element (2) where the two areas (1, 3) are in parallelism with one another the rolling element (2) suppresses a "mechanical noise" and other effects of the environment such as vibrations, acceleration and thrust with regard to the triggering.

6. Process as claimed in any one of claims 1 - 5, wherein the rotational movement of the second surface (3) required for the rolling element (2) to jump is produced by a torque motor.

7. Process as claimed in any one of claims 1 - 6, wherein the jumping of the rolling element (2) takes place distinctly before the angular position at which an emergency lug (17) contacts the rolling element (2).

8. Process as claimed in any one of claims 4 - 7, wherein the rolling element (2) is transported by an emergency lug (17) on the rotor (12) by means of a second limitation of the second surface (3) in the edge zone (9) of the first surface (1) in the event that the cam following process was delayed and the triggering is thereby effected.

9. Process as claimed in any one of claims 7 or 8, wherein the jumping of the rolling element (2) releases a locking pawl (5) in that the pawl moves in the direction of the second surface (3) and that as a part of the pawl cascade with force-reduction mechanism the locking pawl (5) triggers the cascade as a whole.

10. Process as claimed in any one of claims 1 - 9, wherein the gap tolerance between the end of a tappet rod (20) and the locking pawl (5) is adjusted by rotating a tappet rod (20) against a tappet head (22) which is mounted secure against rotation.

11. Process as claimed in any one of claims 1 - 10, wherein the position of the rotor (12) is monitored by an optical light barrier and by the electrically conductive torsion spring, and the position of the locking pin (50) is monitored by solenoid switches to the effect that redundant monitoring signals are generated and processed in coincidental circuitry.

12. Process as claimed in claim 11, wherein in an operational condition with the flap (33) locked or with the main catch locked the triggering system can be tested for correct functioning.

13. Use of the process as claimed in any one of claims 1 - 12 in the opening of fire extinguishers for the purpose of suppressing dust and/or gas explosions, as well as fires in industrial facilities.

14. Device for carrying out the process as claimed in any one of claims 1 - 12 on a flap,
wherein inside a gear case (10) at least one rolling element (2) is arranged between two surfaces (1, 3), a first surface (1) of a locking pawl (5) being provided for the application of spring loading, and a second, concentric rotatable surfaces (3) of a rotor (12) for rolling over (19),
wherein the second surface (3) is constructed as part of a cam following surface (19) and as a section of the rotor (12), the latter being arranged mounted in the gear case (10) and supported on a needle bearing,
and wherein the first surface (1) has an edge zone (9) in which the parallelism of the surfaces verges into a non-parallelism or a divergence.

15. Triggering system as claimed in claim 14, wherein means are provided for the adjustment of the gap tolerance between the end of a tappet rod (20) and the locking pawl (5).

16. Triggering system as claimed in any one of claims 14 or 15, wherein means are provided for the monitoring of the positional states of the rotor (12) and the locking pin (50).

17. Triggering system as claimed in any one of claims 14 - 16, wherein (9) the first surface (1) in an edge zone verges into a cylindrical surface in which the triggering point is located at which the surfaces (1, 3) are no longer concentric with one another and at which the cam following rolling element (2) is provided for jumping in rolling direction,
and wherein the first surface (1) is constructed as part of a locking pawl (5).

18. Triggering system as claimed in any one of claims 14 - 17, wherein rotor (12) has an emergency lug (17), a reset lug (18), a following cam (19), a cam 15 and a reset pin (16) and wherein the rotor (12) is located in a cylindrical milled-out opening (11) in the gear case (10).

19. Triggering system as claimed in any one of claims 14 - 18, wherein with cam (15) rotor (12) engages in the slot of a coil body which is part of a torque motor, the latter being provided as the drive for the electrodynamic triggering mechanism.

20. Triggering system as claimed in any one of claims 14 - 19, wherein an opening (7) is provided in the gear case (10) as a catch position for rolling element (2) in which the rolling element (2) is located after the jumping.

21. Triggering system as claimed in any one of claims 15 - 20, wherein as a means for adjustment a rotatable tappet rod (20) with a tappet head (22) which is secured against rotation is arranged between locking pawl (5) and a main catch (40), by means of which the clearance between the end of tappet rod (20) and the locking pawl (5) can be adjusted.

22. Triggering system as claimed in claim 21, wherein the tappet rod (20) has a female thread (26) that accommodates the male thread (27) of the tappet head (22).

23. Triggering system as claimed in any one of claims 16 - 22, wherein as a monitoring means for the detection of the position of the rotor (12) an optical light barrier arranged around the reset pin (16) and a torsion spring electrical cable monitoring device, and for the detection of the position of the locking pin (50) solenoid switches and a coincidence circuit for processing the monitoring signals, are provided.

## Revendications

1. Procédé en vue d'un système de déclenchement mécanique muni de clapets mis en tension préalable, **caractérisé en ce qu'**une première surface guidée et mise en tension préalable (1) agit sur au moins un organe de roulement (2) avec une force (P), sachant que cette force (P) exercée sur l'organe de roulement (2) est transmise à une deuxième surface (3) logée de manière concentrique et rotative par rapport à la première surface (1), ou une deuxième surface (3) posée de manière parallèle et décalable par rapport à la première surface (1),
que l'organe de roulement (2), lors du mouvement de la deuxième surface (3), roule sur les deux surfaces (1, 3) jusqu'à ce qu'il parvient dans une zone marginale (9) de la première surface (1), dans laquelle le parallélisme des surfaces (1, 3) se transforme en non-parallélisme ou en divergence, si bien que l'organe de roulement (2) est expulsé et que les surfaces (1, 3) se rapprochent l'une de l'autre, et que le déclenchement est provoqué par le mouvement de la surface mise en tension préalable (1) vers la contre-surface, ou deuxième surface (3).

2. Procédé selon la revendication 1, **caractérisée en ce que** le mouvement de la deuxième surface (3) est accompli avec le minimum de frottements grâce à un roulement à rouleaux (12, 13, 14).

3. Procédé selon la revendication 1 ou 2, **caractérisée en ce que** l'organe de roulement (2),, une fois qu'il a été expulsé ou après un saut, est rattrapé par une position de rattrapage qui la ramène sur sa position initiale à l'aide d'un "nez" de rappel (18) en tant que première limitation de la deuxième surface (3).

4. Procédé selon l'une des revendications 1 à 3, **caractérisée en ce qu'**un rotor (12) est maintenu par une tension préalable d'un ressort de torsion sur une position initiale, et qu'il est ramené sur sa position initiale après le déclenchement.

5. Procédé selon l'une des revendications 1 à 4, **caractérisée en ce que** l'organe de roulement (2) repose sur une voie de roulement qui se situe dans la zone de la position neutre de l'organe de roulement (2), là où les deux surfaces (1, 3) sont parallèles l'une à l'autre, et supprime ainsi un "cliquetis mécanique" et d'autres effets de l'environnement tels que des oscillations, l'accélération et des à-coups par rapport au déclenchement.

6. Procédé selon l'une des revendications 1 à 5, **caractérisée en ce que** le mouvement de rotation de la deuxième surface (3) nécessaire pour le saut de l'organe de roulement (2) est généré par un moteur couple.

7. Procédé selon l'une des revendications 1 à 6, **caractérisée en ce que** le saut de l'organe de roulement (2) s'effectue nettement avant la position angulaire à laquelle un nez de secours (17) touche l'organe de roulement (2).

8. Procédé selon l'une des revendications 4 à 7, **caractérisée en ce que** l'organe de roulement (2) est acheminé par un nez de secours (17) sur le rotor (12) au moyen d'une deuxième délimitation de la deuxième surface (3), dans la zone marginale (9) de la première surface (1), si jamais l'opération de roulement a été retardée, et qu'un déclenchement est ainsi provoqué.

9. Procédé selon la revendication 7 ou 8, **caractérisée en ce que** le saut de l'organe de roulement (2) libère un cliquet d'arrêt (5), étant donné que ce cliquet d'arrêt (5) se déplace en direction de la deuxième surface (3) et qu'en tant qu'élément d'une cascade de cliquets, il déclenche l'ensemble de la cascade avec un mécanisme d'assistance de puissance.

10. Procédé selon l'une des revendications 1 à 9, **caractérisée en ce que** le réglage des tolérances de fente entre l'extrémité d'une tige de poussoir (20) et le cliquet d'arrêt (5) est obtenu par la rotation de la tige de poussoir (20) contre une tête de poussoir (22) logée d'une manière empêchant toute torsion.

11. Procédé selon l'une des revendications 1 à 10, **caractérisée en ce que** la surveillance de la position du rotor (12) est assurée au moyen d'une barrière photoélectrique et du ressort de torsion électriquement conducteur, et que la surveillance de la position de la cheville de verrouillage (50) à l'aide d'un commutateur magnétique, qui génère des signaux de surveillance redondants et qui traite ceux-ci dans un circuit à coïncidence.

12. Procédé selon la revendication 11, **caractérisée en ce que** le fonctionnement en toute sécurité du système de déclenchement à l'état de marche peut être vérifié pendant que le clapet (33) est verrouillé, ou que la trappe principale est verrouillée.

13. Application du procédé selon l'une des revendications 1 à 12 pour l'ouverture d'extincteurs d'incendie en vue d'empêcher des explosions de poussière et/ ou de gaz, ainsi que des incendies dans des installations industrielles.

14. Dispositif pour l'application du procédé selon l'une des revendications 1 à 12 sur un clapet, **caractérisé en ce que** dans un boîtier de commutation (10) est placé au moins un organe de roulement (2) entre deux surfaces (1, 3), sachant qu'une première surface (1) est prévue pour l'application d'une tension préalable, et qu'une deuxième surface concentrique et pouvant être tordue (3) sur un rotor (12) est prévue pour le roulement, que la deuxième surface (3) est configurée comme élément d'une courbe de roulement (19) et comme segment d'un rotor (12), que ce dernier est installé et logé dans le boîtier de commutation (10) et qu'il repose sur un roulement à aiguilles, et que cette première surface (1) comporte une zone marginale (9) dans laquelle le parallélisme des surfaces (1, 3) se transforme en non-parallélisme ou en divergence.

15. Système de déclenchement selon la revendication 14, **caractérisé en ce que** des moyens sont prévus pour l'ajustement des tolérances de fente entre l'extrémité d'une tige de poussoir (20) et le cliquet d'arrêt (5).

16. Système de déclenchement selon la revendication 14 ou 15, **caractérisé en ce que** des moyens sont prévus pour la surveillance des différentes positions du rotor (12) et de la cheville de verrouillage (50).

17. Système de déclenchement selon l'une des revendications 14 à 16, **caractérisé en ce que** la première surface (1) dans une zone marginale (9) se transforme en une surface cylindrique dans laquelle se trouve le point de déclenchement auquel les surfaces (1, 3) ne sont plus concentriques l'une par rapport à l'autre, et auquel il est prévu que l'organe de roulement (2) qui roule va sauter dans la direction du roulement, et que la première surface (1) est configurée en tant que partie d'un cliquet d'arrêt (5).

18. Système de déclenchement selon l'une des revendications 14 à 17, **caractérisé en ce que** le rotor (12), un nez de secours (17) comporte un nez de rappel (18), une courbe de roulement (19), un ergot (15) et une cheville de rappel (16), et que le rotor (12) se trouve dans une fraisure cylindrique (11) du boîtier de commutation (10).

19. Système de déclenchement selon l'une des revendications 14 à 18, **caractérisé en ce que** le rotor (12) vient en prise avec l'ergot (15) dans une fente d'un corps de bobine qui fait partie d'un moteur couple, sachant que ce dernier est prévu comme entraînement pour le mécanisme de déclenchement électrodynamique.

20. Système de déclenchement selon l'une des revendications 14 à 19, **caractérisé en ce qu'**un évidement (7) dans le boîtier de commutation (10) est prévu comme position de rattrapage pour l'organe de roulement (2), afin que cet organe de roulement (2) y repose après son saut.

21. Système de déclenchement selon l'une des revendications 15 à 20, **caractérisé en ce qu'**une tige de poussoir rotative (20) avec une tête de poussoir résistante aux torsions (22) est installé entre le cliquet d'arrêt (5) et un piège principal (40) en guise de moyen d'ajustement, ce qui permet de régler le jeu entre l'extrémité de la tige de poussoir (20) et le cliquet d'arrêt (5).

22. Système de déclenchement selon la revendication 21, **caractérisé en ce que** la tige de poussoir (20) comporte un filetage intérieur (26) qui recueille le filetage extérieur (27) de la tête de poussoir (22).

23. Système de déclenchement selon l'une des revendications 16 à 22, **caractérisé en ce qu'**une barrière photoélectrique installée autour de la cheville de rappel (16) et un contrôle électrique de la conduite du ressort de torsion sont prévus comme moyens de surveillance pour l'identification de la position du rotor (12), des commutateurs magnétiques pour l'identification de la position de la cheville de verrouillage (50), ainsi qu'un circuit à coïncidence pour le traitement des signaux de surveillance.
